# EUROPEAN PATENT APPLICATION

(11) **EP 2 684 458 A1**
(43) Date of publication of application: **15.01.2014**
(21) Application number: 11860623.5
(22) Date of filing: 08.03.2011
(51) Int. Cl.: A22C 11/00

(54) **DEVICE FOR CUTTING PORTIONS OF CONNECTIONS BETWEEN LINKED SAUSAGES, AND SAUSAGE MANUFACTURING SYSTEM**

(71) Applicant: Kyoei Engineering Co., Ltd., Tokyo 144-0052 (JP)
(72) Inventor: Murata Mikio, Tokyo 144-0052 (JP); Himi Kichihei, Tokyo 144-0052 (JP); Ogawa Tomoichiro, Tokyo 144-0052 (JP)
(74) Representative: Peckmann, Ralf
(86) International application number: PCT/JP2011/055372
(87) International publication number: WO 2012/120642

(57) **Abstract**

There is provided a linked sausage connecting portion cutting apparatus for cutting front ends and rear ends of connecting portions connecting individual sausages while keeping the conveyance speed of linked sausages at a high speed.

When the front end of a connecting portion S2 is detected by a first detecting unit 66, a first cutting unit 32 operates based on a control signal from a control unit 30 to cut the front end of the connecting portion S2 with cutting parts at the inside and cut the front end of the connecting portion S2 subsequent to the cut connecting portion S2 with cutting parts at the outside while linked sausages S are being conveyed at a predetermined conveyance speed. When the rear end of the connecting portion S2 is detected by a second detecting unit 68, a second cutting unit 34 operates based on a control signal from the control unit 30 to cut the rear end of the connecting portion S2 with the cutting parts at the inside and cut the rear end of the connecting portion S2 subsequent to the cut connecting portion S2 with the cutting parts at the outside while the linked sausages S are being conveyed at the predetermined conveyance speed.

## Description

### Technical Field

The present invention relates to a linked sausage connecting portion cutting apparatus for cutting connecting portions of linked sausages composed of individual sausages connected via the connecting portions (for example, twisted portions) to separate the individual sausages from each other, and a sausage producing system for inserting a skewer into the separated individual sausage to form a complete product.

### Background Art

An example of conventional sausage production process includes: a packing step of extruding sausage dough into a natural intestine or an artificial edible casing by a packing device to pack a fixed amount of dough, and twisting a resultant to form linked sausages; a suspension step of conveying the linked sausages in a line from a discharge port of the packing device by using a conveyor, and making loops of a fixed number of the linked sausages and hooking them on a suspension rod by a suspension means; a mounting step of hanging the suspension rod on a heat treatment cart by a moving means; a heating step of performing heat treatment on the loop-shaped sausages in a heating chamber together with the cart; and a cutting step of cutting off the linked sausages after the heating one by one by a cutting means.

In the cutting step, individual sausages are conventionally cut off from the linked sausages in a state that many sausages are connected in a linked shape. As an example of the cutting method, there is a known method of cutting off individual sausages from linked sausages using a chopping blade, a cutter like scissors, or the like (see, for example, Patent Document 1).

Here, the following Patent Document 1 discloses a step of cutting the connecting portions of the linked sausages by a cutting means that includes a pair of blades each having cutting parts on both sides thereof and an air cylinder for driving the pair of blades to open and close to cross each other.

In the following Patent Document 1, the pair of blades are screwed together by a fixed fulcrum pin and freely rotatable around the fulcrum pin. The base end portions of the blades are connected to a piston rod of the air cylinder by a link member so that the cutting parts of the pair of blades open and close to cross each other by the stroke of the reciprocating movement of the piston rod. This cutting means is disposed such that the blades are vertically inserted from above between a fixed roller member and a movable roller member adjacent thereto on a sausage travel direction side and are able to cut the connecting portion of the sausage while holding the connecting portion between them.

Patent document 1: Japanese Patent Application Laid-open No. H2-190296

### Disclosure of the Invention

### Problems to Be Solved by the Invention

However, the front end and the rear end of the connecting portion of the linked sausages are cut by the opening and closing movement of one stroke of the pair of blades in the above conventional technique, but the opening and closing movement requires a predetermined time period even by the double-edged blades. Therefore, if the conveyance speed (feed speed or supply speed) of the sausages are greatly increased, it becomes difficult to satisfactorily cut the front end and the rear end of the connecting portion even if the cutting efficiency is increased by the pair of double-edged blades. It is believed that it is required to decrease the conveyance sped (feed speed or supply speed) of the linked sausages at the time when cutting the connecting portion of the linked sausages, or temporarily stop the linked sausages at the time when cutting the connecting portion.

Further, the above conventional technique includes a sensor for detecting the front end of the connecting portion so that when the front end of the connecting portion is detected by the sensor, a signal is outputted from the sensor. A control apparatus which has received the signal from the sensor operates the air cylinder to perform cross movement of the pair of blades, thereby cutting the front end of the connecting portion. The cutting of the rear end of the connecting portion is performed by the same method.

Incidentally, the above method requires steps such as a detection step for the connecting portion by the sensor, a signal output step from the sensor, an output step of the control signal by the control apparatus which has received the signal from the sensor, an operation step of the air cylinder which has received the control signal from the control apparatus, and an execution step of the cross movement of the pair of blades, and also requires consideration of elements such as mechanical dimensional error and influence of inertia force of the blades and the like. Then, considering the above elements, a reasonable time period is absolutely required to detect the front end of the connecting portion of the linked sausages by the sensor, cut the front end with the pair of blades, detect by the sensor the rear end of the connecting portion whose front end has been cut, and cut the rear end with the pair of blades. As a result, it is considered to be absolutely essential to decrease the conveyance sped (feed speed or supply speed) of the linked sausages at the time when cutting the connecting portion of the linked sausages, or temporarily stop the linked sausages at the time when cutting the connecting portion.

Hence, in consideration of the above problems, it is an object of the present invention to provide a linked sausage connecting portion cutting apparatus which can cut front ends and rear ends of connecting portions connecting individual sausages while keeping the conveyance speed of linked sausages at a high speed.

It is another object of the present invention to provide a sausage producing system for inserting a skewer into the individual sausage separated by the linked sausage connecting portion cutting apparatus to form a complete product.

### Means for Solving the Problems

A first invention 1 is a linked sausage connecting portion cutting apparatus for cutting connecting portions of linked sausages composed of a plurality of sausages connected via the connecting portions to separate the sausages from each other, including: a first cutting unit that cuts a front end of the connecting portion; a second cutting unit that cuts a rear end of the connecting portion; a first detecting unit that detects the front end of the connecting portion; a second detecting unit that detects the rear end of the connecting portion; a control unit that controls an operation of the first cutting unit based on a detection signal from the first detecting unit and controls an operation of the second cutting unit based on a detection signal from the second detecting unit; and a conveyor unit that conveys the linked sausages to the first cutting unit and the second cutting unit, wherein the first cutting unit includes a pair of blades each having cutting parts formed at the inside and outside thereof, and a driving mechanism that causes the pair of blades to cross each other, wherein the second cutting unit includes a pair of blades each having cutting parts formed at the inside and outside thereof, and a driving mechanism that causes the pair of blades to cross each other, wherein when the front end of the connecting portion is detected by the first detecting unit, the first cutting unit operates based on a control signal from the control unit to cut the front end of the connecting portion with one of the cutting parts at the inside and the cutting parts at the outside and cut the front end of the connecting portion subsequent to the cut connecting portion with the other of the cutting parts at the inside and the cutting parts at the outside while the linked sausages are being conveyed at a predetermined conveyance speed, and wherein when the rear end of the connecting portion is detected by the second detecting unit, the second cutting unit operates based on a control signal from the control unit to cut the rear end of the connecting portion with one of the cutting parts at the inside and the cutting parts at the outside and cut the rear end of the connecting portion subsequent to the cut connecting portion with the other of the cutting parts at the inside and the cutting parts at the outside while the linked sausages are being conveyed at the predetermined conveyance speed.

In this case, it is preferable that the first detecting unit and the second detecting unit are photosensors, the photosensor includes a light emitting unit and a light receiving unit, and when an amount of light received by the light receiving unit varies from small to large, the first detecting unit detects the front end of the connecting portion and outputs the detection signal to the control unit, and when an amount of light received by the light receiving unit varies from large to small, the second detecting unit detects the rear end of the connecting portion and outputs the detection signal to the control unit.

In this case, it is preferable that the conveyor unit is a belt that conveys the linked sausages in a straight line direction.

A second invention is a sausage producing system including: a linked sausage connecting portion cutting apparatus for cutting connecting portions of linked sausages composed of a plurality of sausages connected via the connecting portions to separate the sausages from each other; and a sausage skewering device for inserting a skewer into the individual sausage separated by the linked sausage connecting portion cutting apparatus, the linked sausage connecting portion cutting apparatus including: a first cutting unit that cuts a front end of the connecting portion; a second cutting unit that cuts a rear end of the connecting portion; a first detecting unit that detects the front end of the connecting portion; a second detecting unit that detects the rear end of the connecting portion; a control unit that controls an operation of the first cutting unit based on a detection signal from the first detecting unit and controls an operation of the second cutting unit based on a detection signal from the second detecting unit; and a conveyor unit that conveys the linked sausages to the first cutting unit and the second cutting unit, wherein the first cutting unit includes a pair of blades each having cutting parts formed at the inside and outside thereof, and a driving mechanism that causes the pair of blades to cross each other, wherein the second cutting unit includes a pair of blades each having cutting parts formed at the inside and outside thereof, and a driving mechanism that causes the pair of blades to cross each other, wherein when the front end of the connecting portion is detected by the first detecting unit, the first cutting unit operates based on a control signal from the control unit to cut the front end of the connecting portion with one of the cutting parts at the inside and the cutting parts at the outside and cut the front end of the connecting portion subsequent to the cut connecting portion with the other of the cutting parts at the inside and the cutting parts at the outside while the linked sausages are being conveyed at a predetermined conveyance speed, and wherein when the rear end of the connecting portion is detected by the second detecting unit, the second cutting unit operates based on a control signal from the control unit to cut the rear end of the connecting portion with one of the cutting parts at the inside and the cutting parts at the outside and cut the rear end of the connecting portion subsequent to the cut connecting portion with the other of the cutting parts at the inside and the cutting parts at the outside while the linked sausages are being conveyed at the predetermined conveyance speed, and the sausage skewering device including: a sausage holder that houses the individual sausage separated by the linked sausage connecting portion cutting apparatus; a skewer holder that houses the skewer to be inserted into the sausage; and a driving source that shoots the skewer housed in the skewer holder toward the sausage, wherein the sausage holder and the skewer holder are positioned such that an axis of the sausage housed in the sausage holder and an axis of the skewer housed in the skewer holder are located on a straight line.

In this case, it is preferable that the sausage holder and the skewer holder are provided on a same rotary shaft, a rotation angle detecting unit that detects rotation of the rotary shaft and a drive control unit that controls the driving source are provided, and when the rotation angle detecting unit detects that the rotary shaft has rotated by a predetermined angle, the rotation angle detecting unit outputs a detection signal to the drive control unit, and the driving source shoots the skewer based on a control signal from the drive control unit.

In this case, it is preferable that the first detecting unit and the second detecting unit are photosensors, the photosensor includes a light emitting unit and a light receiving unit, and when an amount of light received by the light receiving unit varies from small to large, the first detecting unit detects the front end of the connecting portion and outputs the detection signal to the control unit, and when an amount of light received by the light receiving unit varies from large to small, the second detecting unit detects the rear end of the connecting portion and outputs the detection signal to the control unit.

In this case, it is preferable that the conveyor unit is a belt that conveys the linked sausages in a straight line direction.

### Effect of the Invention

The linked sausage connecting portion cutting apparatus of the present invention can cut front ends and rear ends of connecting portions connecting individual sausages while keeping the conveyance speed of linked sausages at a high speed.

Further, the sausage producing system of the present invention can insert a skewer into the individual sausage separated by the linked sausage connecting portion cutting apparatus to form a complete product.

### Brief Description of Drawings

[FIG. 1] is a perspective view of a main part of a linked sausage connecting portion cutting apparatus according to a first embodiment of the present invention;
[FIG. 2] is a structural view of a cutting unit of the linked sausage connecting portion cutting apparatus according to the first embodiment of the present invention;
[FIG. 3] is a block diagram illustrating a control system of the linked sausage connecting portion cutting apparatus according to the first embodiment of the present invention;
[FIG. 4] is a view illustrating a positional relationship between the connecting portions of linked sausages to be cut with the linked sausage connecting portion cutting apparatus according to the first embodiment of the present invention and detecting units;
[FIG. 5] is a perspective view of a main part of a sausage skewering device constituting a sausage producing system according to the first embodiment of the present invention; and
[FIG. 6] is a block diagram illustrating a control system of the sausage skewering device constituting the sausage producing system according to the first embodiment of the present invention.

### Best Mode for Carrying out the Invention

A linked sausage connecting portion cutting apparatus and a sausage producing system according to a first embodiment of the present invention will be described referring to the drawings. Note that the "sausage producing system" of the present invention is composed of the "linked sausage connecting portion cutting apparatus" and a "sausage skewering device."

### (Linked sausage connecting portion cutting apparatus)

The linked sausage connecting portion cutting apparatus will be described. Though a configuration of the linked sausage connecting portion cutting apparatus for cutting and removing connecting portions of linked sausages will be described in this embodiment, the cutting object is not limited to connecting portions of linked sausages, and the apparatus is widely applicable also to cutting of connecting portions of linked general food products.

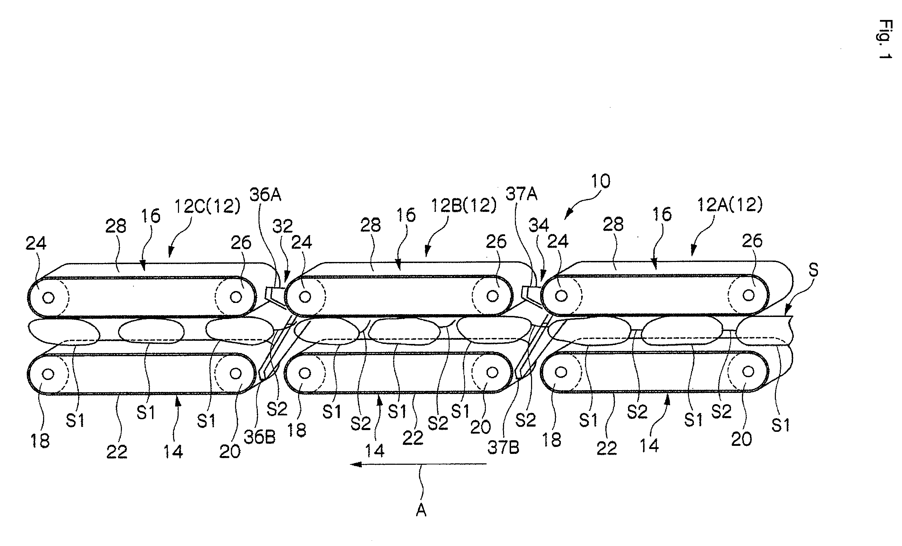

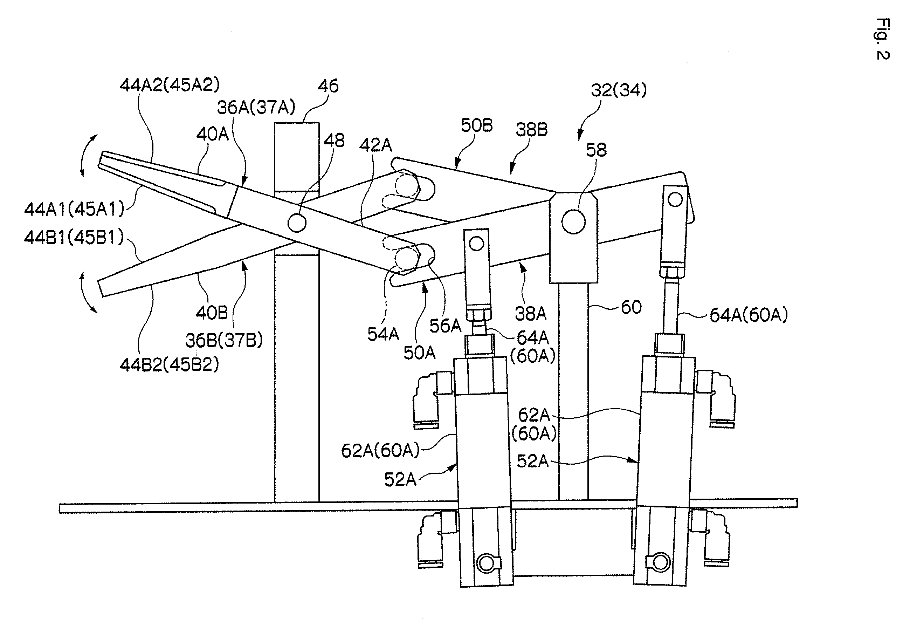

As illustrated in FIG. 1 and FIG. 2, a linked sausage connecting portion cutting apparatus 10 are provided with a conveyor belt 12 for conveying linked sausages S. The conveyor belt 12 is composed of, for example, a first conveyor belt part 12A, a second conveyor belt part 12B, and a third conveyor belt part 12C which are arranged in series to be located on a straight line.

Note that the conveyor belt 12 is an embodiment of a "conveyor unit" of the present invention.

The first conveyor belt part 12A is composed of a lower-side conveyor belt 14 for supporting from below and conveying the linked sausages S to be conveyed and an upper-side conveyor belt 16 for supporting from above and conveying the linked sausages S to be conveyed.

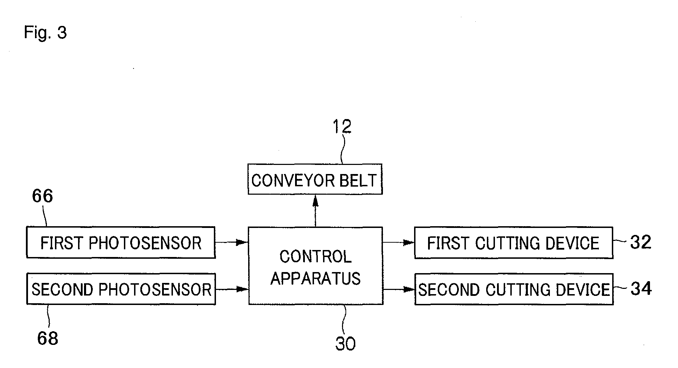

The lower-side conveyor belt 14 is composed of a driving roller 18, a driven roller 20, and a belt (for example, endless belt) 22 stretched between the rollers 18, 20. The driving roller 18 is drive-controlled by a control apparatus 30 (see FIG. 3). The driving roller 18 rotationally drives to move the belt 22.

The upper-side conveyor belt 16 is composed of, similarly to the lower-side conveyor belt 14, a driving roller 24, a driven roller 26, and a belt (for example, endless belt) 28 stretched between the rollers 24, 26. The driving roller 24 is drive-controlled by the control apparatus 30 (see FIG. 3). The driving roller 24 rotationally drives to move the belt 28.

Note that the control apparatus 30 (see FIG. 3) is an embodiment of a "control unit" of the present invention.

As described above, the linked sausages S are conveyed in a forward direction (an arrow A direction in FIG. 1) with the belt 22 of the lower-side conveyor belt 14 in contact therewith from below and the belt 28 of the upper-side conveyor belt 16 in contact therewith from above.

Note that the second conveyor belt part 12B and the third conveyor belt part 12C are configured similarly to the first conveyor belt part 12A.

Further, the conveyor belt 12 is not limited to, for example, the case where it is composed of the first conveyor belt part 12A, the second conveyor belt part 12B, and the third conveyor belt part 12C, but may be composed of four or more conveyor belt parts.

Between, the second conveyor belt part 12B and the third conveyor belt part 12C, a first cutting device 32 for cutting a connecting portion (twisted portion) S2 connecting individual sausages S1 of the linked sausages S is arranged.

Note that the first cutting device 32 is an embodiment of a "first cutting unit) of the present invention.

Further, between the first conveyor belt part 12A and the second conveyor belt part 12B, a second cutting device 34 for cutting a connecting portion (twisted portion) S2 connecting the individual sausages S1 of the linked sausages S is arranged.

Note that the second cutting device 34 is an embodiment of a "second cutting unit" of the present invention.

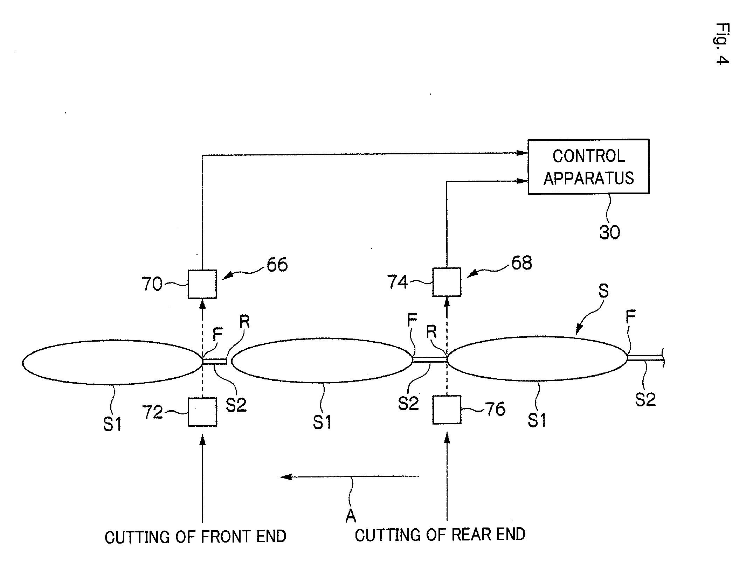

In this embodiment, the first cutting device 32 is set to cut a front end F (see FIG. 4) of the connecting portion S2. Further, the second cutting device 34 is set to cut a rear end R (see FIG. 4) of the connecting portion S2. However, the first cutting device 32 and the second cutting device 34 are not limited to the above but may be set such that the first cutting device 32 is set to cut the rear end R (see FIG. 4) of the connecting portion S2 and the second cutting device 34 is set to cut the front end F (see FIG. 4) of the connecting portion S2.

As illustrated in FIG. 2, the first cutting device 32 has a pair of blades 36A, 36B each having cutting parts formed at the inside and the outside thereof, and a pair of driving mechanisms 38A, 38B for respectively operating the pair of blades 36A, 36B to cross each other.

Since the pair of blades 36A, 36B are similarly configured, the configuration of one of the pair of blades will be described.

One blade 36A of the pair of blades 36A, 36B is composed of a cutting part 40A and an arm part 42A. Cutting parts 44A1, 44A2 are formed at the inside and the outside of the cutting part 40A respectively. Therefore, the one blade 36A of the pair of blades 36A, 36B is a so-called double-edged blade. A shaft part 48 attached to a supporting member 46 penetrates an almost middle of the arm part 42A. The arm part 42A rotates around an axis of the shaft part 48. As described above, the shaft part 48 penetrates an almost center of the arm part 42A of the blade 36A.

Note that the other blade 36B of the pair of blades 36A, 36B is configured similarly to the one blade 36A of the pair of blades 36A, 36B. Further, the shaft part 48 serves as a common shaft part 48 for the pair of blades 36A, 36B.

The driving mechanisms 38A, 38B are composed of a pair of link parts 50A, 50B for operating the pair of blades 36A, 36B to cross each other, and a pair of driving sources 52A (illustration of other driving sources is omitted) for driving the pair of link parts 50A, 50B.

Here, since the driving mechanisms 38A for the one blade 36A of the pair of blades 36A, 36B is configured similarly to the driving mechanism 38B for the other blade 36B of the pair of blades 36A, 36B, the driving mechanism 38A for one of them will be described.

The link part 50A is formed with a groove part 56A engaged with a projecting part 54A attached to the arm part 42A of the one blade 36A of the pair of blades 36A, 36B. The projecting part 54A is engaged with the groove part 56A of the link part 50A, so that when the link part 50A is operated by the driving sources 52A, the driving force is transmitted to the arm part 42A and the arm part 42A moves in tandem therewith.

Note that the groove part 56A is formed in a partially opening long hole shape. Therefore, the projecting part 54A enters the groove part 56A from the opening region and freely moves inside the groove part 56A.

A rotary shaft 58 penetrates an almost middle of the link part 50A. The rotary shaft 58 is attached to a supporting member 60. The rotary shaft 58 is a common rotary shaft for the link part 50A of one of the pair of blades 36A, 36B and for the link part 50B of the other of the pair of blades 36A, 36B.

To one end portion (an end portion on the groove part side) and to the other end portion (an end portion opposite to the grove part side) of the link part 50A, the driving sources 52A are connected. As the driving sources 52A, for example, two air cylinders 60A are employed. The air cylinder 60A has a cylinder 62A and a rod 64A extending from and contracting into the cylinder 62A. The air cylinder 60A is drive-controlled by the control apparatus 30.

Note that as the driving source 52A, another driving source such as a hydraulic cylinder, a solenoid or the like other than the air cylinder 60A can also be employed.

To the vicinity of one end portion (the vicinity of an end portion on the groove part 56A side) of the link part 50A, a tip end portion of the rod 64A of one of the air cylinders 60A is attached. Further, to the other end portion (an end portion opposite to the groove part 56A side) of the link part 50A, a tip end portion of the rod 64A of the other air cylinder 60A is attached.

The rod 64A of the air cylinder 60A connected to the vicinity of one end portion (the vicinity of an end portion on the groove part 56A side) of the link part 50A extends and is pushed out of the cylinder 62A by air pressure and the rod 64A of the air cylinder 60A connected to the other end portion (the other end portion opposite to the groove part 56A side) of the link part 50A contracts and is housed into the cylinder 62A by air pressure, thereby raising upward the one end portion (the end portion on the groove part 56A side) of the link part 50A. Thus, one side of the arm part 42A of the blade 36A is pushed upward. Consequently, the cutting part 40A of the blade 36A lowers downward.

Conversely, the rod 64A of the air cylinder 60A connected to the vicinity of the one end portion (the vicinity of the end portion on the groove part 56A side) of the link part 50A contracts and is housed into the cylinder 62A by air pressure and the rod 64A of the air cylinder 60A connected to the other end portion (the other end portion opposite to the groove part 56A side) of the link part 50A extends and is pushed out of the cylinder 62A by air pressure, thereby lowering downward the one end portion (the end portion on the groove part 56A side) of the link part 50A. Thus, the arm part 42A of the blade 36A is pulled downward and lowers. Consequently, the cutting part 40A of the blade 36A rises upward.

The above processes are repeated to cause the cutting parts 40A, 40B of the pair of blades 36A, 36B to perform vertical movements.

Here, the timing of the vertical movements of the one blade 36A and the other blade 36B of the pair of blades 36A, 36B is set to cause the cutting parts 40A, 40B to cross each other such that when the cutting part 40A of the one blade 36A moves upward, the cutting part 40B of the other blade 36B moves downward, and when the cutting part 40A of the one blade 36A moves downward, the cutting part 40B of the other blade 36B moves upward.

Note that since the rods 64A of the air cylinders 52A are connected to both of the vicinity of the one end portion (the vicinity of the end portion on the groove part side) of the link part 50A and the other end portion (the end portion opposite to the groove part side) of the link part 50A, the movements of around the axis of the rotary shaft 58 of the link part 50A are at almost the same speed. Consequently, the vertical movement of the cutting part 40A of the blade 36A is substantially at the uniform velocity at all times to make the cutting force acting on the connecting portion S2 by the cross movements of the pair of blades 36A, 36B constant at all times. Thus, there is no variation caused in the cutting force on the connecting portion S2 of the linked sausages S. As a result, it is possible to provide a clean cut surface of the connecting portion S2 of the linked sausages S and to surely cut the connecting portion S2.

The cross movements of the pair of blades 36A, 36B can be realized by drive control by the control apparatus 30.

As illustrated in FIG. 3 and FIG. 4, the linked sausage connecting portion cutting apparatus 10 includes a first photosensor 66 and a second photosensor 68 each for detecting the connecting portion S2 of the linked sausages S. In this embodiment, the first photosensor 66 is used for a purpose for detecting the front end F (see FIG. 4) of the connecting portion S2 of the linked sausages S, and the second photosensor 68 is used for a purpose for detecting the rear end R (see FIG. 4) of the connecting portion S2 of the linked sausages S.

However, the first photosensor 66 may be set to detect the rear end R (see FIG. 4) of the connecting portion S2 of the linked sausages S, and the second photosensor 68 may be set to detect the front end F (see FIG. 4) of the connecting portion S2 of the linked sausages S.

Note that the first photosensor 66 is an embodiment of a "first detecting unit" of the present invention, and the second photosensor 68 is an embodiment of a "second detecting unit" of the present invention.

When drive-controlling the air cylinders 60A, the control apparatus 30 performs the control using detection signals from the photosensors 66,68 as a trigger.

The first photosensor 66 is disposed near the first cutting device 32. Further, the first photosensor 66 has a light receiving unit 70 and a light emitting unit 72. The light receiving unit 70 and the light emitting unit 72 are arranged on the upper side and the lower side of the linked sausages S to be conveyed.

Note that the light receiving unit 70 and the light emitting unit 72 of the first photosensor 66 only need to be arranged in a positional relationship to hold the linked sausages S to be conveyed between them, and may be arranged, for example, on the left side and the right side of the linked sausages S.

When a sausage S1 of the linked sausages S passes between the light receiving unit 70 and the light emitting unit 72 of the first photosensor 66, the amount of light blocked by the sausage S1 increases and the amount of light received by the light receiving unit 70 therefore decreases. Further, at the time when the connecting portion S2 of the linked sausages S passes between the light receiving unit 70 and the light emitting unit 72 of the first photosensor 66, the amount of light blocked by the connecting portion S2 decreases and the amount of light received by the light receiving unit 70 therefore increases. In other words, the amount of light received by the light receiving unit 70 of the first photosensor 66 usually varies in the order from "small" to "large" and this variation is repeated. At the timing when the amount of light received by the light receiving unit 70 of the first photosensor 66 varies from "small" to "large," the first photosensor 66 detects the front end F (see FIG. 4) of the connecting portion S2 of the linked sausages 2 and outputs a detection signal to the control apparatus 30. Upon receipt of the detection signal from the first photosensor 66, the control apparatus 30 determines that the front end F (see FIG. 4) of the connecting portion S2 of the linked sausages S has been detected.

The second photosensor 68 is disposed near the second cutting device 34. Further, the second photosensor 68 has a light receiving unit 74 and a light emitting unit 76. The light receiving unit 74 and the light emitting unit 76 are arranged on the upper side and the lower side of the linked sausages S to be conveyed.

Note that the light receiving unit 74 and the light emitting unit 76 of the second photosensor 68 only need to be arranged in a positional relationship to hold the linked sausages S to be conveyed between them, and may be arranged, for example, on the left side and the right side of the linked sausages S.

When the connecting portion S2 of the linked sausages S passes between the light receiving unit 74 and the light emitting unit 76 of the second photosensor 68, the amount of light blocked by the connecting portion S2 decreases and the amount of light received by the light receiving unit 74 therefore increases. Further, when the sausage S1 of the linked sausages S passes between the light receiving unit 74 and the light emitting unit 76 of the second photosensor 68, the amount of light blocked by the sausage S1 increases and the amount of light received by the light receiving unit 74 therefore decreases. In other words, the amount of light received by the light receiving unit 74 of the second photosensor 68 usually varies in the order from "large" to "small" and this variation is repeated. At the timing when the amount of light received by the light receiving unit 74 of the second photosensor 68 varies from "large" to "small," the second photosensor 68 detects the rear end R (see FIG. 4) of the connecting portion S2 of the linked sausages S and outputs a detection signal to the control apparatus 30. Upon receipt of the detection signal from the second photosensor 68, the control apparatus 30 determines that the rear end R (see FIG. 4) of the connecting portion S2 of the linked sausages S has been detected.

Note that the "first detecting unit" and the "second detecting unit" of the present invention are not limited to the "first photosensor 66" and the "second photosensor 68" but may employ wide variety of detecting sensors. For example, a laser sensor may be used in place of the photosensor.

Next, the operation of the linked sausage connecting portion cutting apparatus 10 will be described.

As illustrated in FIG. 1, the linked sausages S composed of a plurality of sausages S connected by the connecting portions S2 are conveyed by the first conveyor belt part 12A of the conveyor belt 12. The linked sausages S are conveyed by the first conveyor belt part 12A and reach the vicinity of the second cutting device 34.

Here, as illustrated in FIG. 4, at the time when the connecting portion S2 of the linked sausages S passes between the light receiving unit 74 and the light emitting unit 76 of the second photosensor 68, the amount of light blocked by the connecting portion S2 decreases and the amount of light received by the light receiving unit 74 therefore increases. Further, at the time when the sausage S1 of the linked sausages S passes between the light receiving unit 74 and the light emitting unit 76 of the second photosensor 68, the amount of light blocked by the sausage S1 increases and the amount of light received by the light receiving unit 74 therefore decreases. At the timing when the amount of light received by the light receiving unit 74 of the second photosensor 68 varies from "large" to "small," the second photosensor 68 detects the rear end R (see FIG. 4) of the connecting portion S2 of the linked sausages S and outputs a detection signal to the control apparatus 30. Upon receipt of the detection signal from the second photosensor 68, the control apparatus 30 determines that the rear end R (see FIG. 4) of the connecting portion S2 of the linked sausages S has been detected.

Then, upon receipt of the detection signal from the second photosensor 68, the control apparatus 30 drive-controls the air cylinders being the driving sources of the second cutting device 34. Thus, the pair of blades 36A, 36B cross each other once. As a result, the rear end R (see FIG. 4) of the connecting portion S2 of the linked sausages S is cut.

In particular, as illustrated in FIG. 2, when the rear end R (see FIG. 4) of the connecting portion S2 is detected by the second photosensor 68, the second cutting device 34 operates based on the control signal from the control apparatus 30 to cut the rear end R (see FIG. 4) of the connecting portion S2 with one of the cutting parts 45A1, 45B1 at the inside and the cutting parts 45A2, 45B2 at the outside while the linked sausages S are being conveyed at a predetermined conveyance speed. Then, it is preferable, in terms of cutting efficiency, to cut the rear end R (see FIG. 4) of the connecting portion S2 (next connecting portion) subsequent to the cut connecting portion S2 with the other of the cutting parts 45A1, 45B1 at the inside and the cutting parts 45A2, 45B2 at the outside. For example, assuming that the rear end R (see FIG. 4) of the first connecting portion S2 is cut with the cutting parts 45A1, 45B1 formed at the inside of the pair of blades 37A, 37B, it is preferable to cut the rear end R (see FIG. 4) of the subsequent connecting portion S2 with the cutting parts 45A2, 45B2 formed at the outside of the pair of blades 37A, 37B.

Note that the linked sausages S are continuously conveyed at the predetermined conveyance speed also at the cutting of the rear end R (see FIG. 4) of the connecting portion S2 of the linked sausages S. Therefore, inside the linked sausage connecting portion cutting apparatus 10, the rear end R (see FIG. 4) of the connecting portion S2 of the linked sausages S is cut while the linked sausages S are being conveyed at a fixed high speed at all times without temporal stop or temporal decrease in conveyance speed.

The linked sausages S with the rear end R (see FIG. 4) of the connecting portion S2 of the linked sausages S cut are conveyed as they are in the forward direction (the arrow A direction in FIG. 1) by the first conveyor belt part 12A and the second conveyor belt part 12B and finally reach the vicinity of the first cutting device 32.

Here, as illustrated in FIG. 4, at the time when the sausage S 1 of the linked sausages S passes between the light receiving unit 70 and the light emitting unit 72 of the first photosensor 66, the amount of light blocked by the sausage S1 increases and the amount of light received by the light receiving unit 70 therefore decreases. Further, at the time when the connecting portion S2 of the linked sausages S passes between the light receiving unit 70 and the light emitting unit 72 of the first photosensor 66, the amount of light blocked by the connecting portion S2 decreases and the amount of light received by the light receiving unit 70 therefore increases. At the timing when the amount of light received by the light receiving unit 70 of the first photosensor 66 varies from "small" to "large," the first photosensor 66 detects the front end F (see FIG. 4) of the connecting portion S2 of the linked sausages S and outputs a detection signal to the control apparatus 30. Upon receipt of the detection signal from the first photosensor 66, the control apparatus 30 determines that the front end F (see FIG. 4) of the connecting portion S2 of the linked sausages S has been detected.

Then, upon receipt of the detection signal from the first photosensor 66, the control apparatus 30 drive-controls the air cylinders 52A being the driving sources of the first cutting device 32. Thus, the pair of blades 36A, 36B cross each other once. As a result, the front end F (see FIG. 4) of the connecting portion S2 (meaning the connecting portion with the rear end having been cut) of the linked sausages S is cut.

Note that the linked sausages S are continuously conveyed at the predetermined conveyance speed also at the cutting of the front end F (see FIG. 4) of the connecting portion S2 of the linked sausages S. Therefore, inside the linked sausage connecting portion cutting apparatus 10, the front end F (see FIG. 4) of the first connecting portion S2 of the linked sausages S is cut while the linked sausages S are being conveyed at a fixed high speed at all times without temporal stop or temporal decrease in conveyance speed.

Thereafter, the cross movements of the pair of blades 36A, 36B of the first cutting device 32 and the cross movements of the pair of blades 37A, 37B of the second cutting device 34 are repeated to cut and remove the connecting portions S2 of the linked sausages S. Consequently, the individual sausages S1 are separated from each other.

In particular, as illustrated in FIG. 2, when the front end F (see FIG. 4) of the connecting portion S2 is detected by the first photosensor 66, the first cutting device 32 operates based on the control signal from the control apparatus 30 to cut the front end F (see FIG. 4) of the connecting portion S2 with one of the cutting parts 44A1, 44B1 at the inside and the cutting parts 44A2, 44B2 at the outside while the linked sausages S are being conveyed at a predetermined conveyance speed. Then, it is preferable, in terms of cutting efficiency, to cut the front end F (see FIG. 4) of the connecting portion S2 (next connecting portion) subsequent to the cut connecting portion S2 with the other of the cutting parts 44A1, 44B1 at the inside and the cutting parts 44A2, 44B2 at the outside. For example, assuming that the front end F (see FIG. 4) of the first connecting portion S2 with the cutting parts 44A1, 44B1 formed at the inside of the pair of blades 36A, 36B, it is preferable to cut the front end F (see FIG. 4) of the subsequent connecting portion S2 with the cutting parts 44A2, 44B2 formed at the outside of the pair of blades 36A, 36B.

As described above, the linked sausage connecting portion cutting apparatus 10 can cut and remove the front end F (see FIG. 4) and rear end R (see FIG. 4) of the connecting portion S2 connecting the individual sausages while keeping the conveyance speed of the linked sausages S at a high speed. Consequently, it is possible to greatly improve the operation efficiency when cutting and removing the front end F (see FIG. 4) and rear end R (see FIG. 4) of the connecting portion S2 connecting the individual sausages.

### (Sausage skewering device)

The sausage skewering device will be described. Though the sausage skewering device for inserting a skewer into an individual sausage will be described in this embodiment, the cutting object is not limited to the sausage, and the sausage skewering device can insert a skewer into a common food product such as chicken meat.

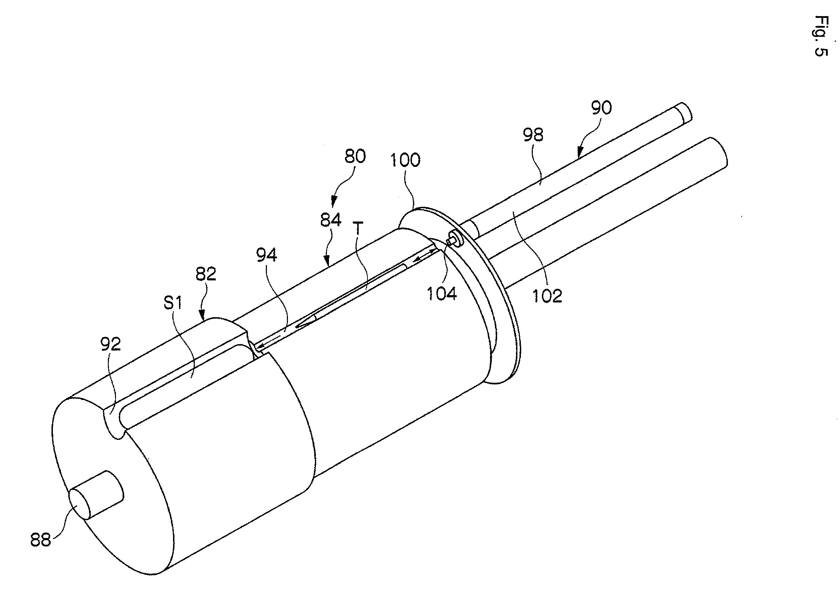

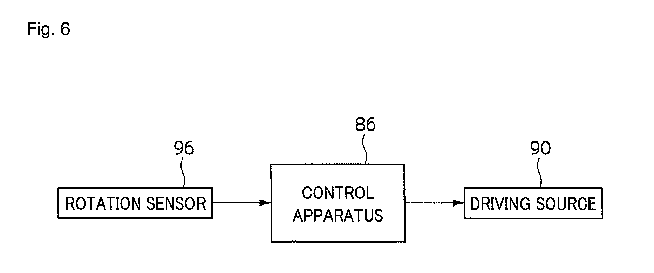

As illustrated in FIG. 5 and FIG. 6, a sausage skewering device 80 has a sausage holder 82 that houses the individual sausage S1 separated by the linked sausage connecting portion cutting apparatus 10, a skewer holder 84 that houses a skewer T to be inserted into the sausage S1, and a driving source 90 that shoots the skewer T housed in the skewer holder 84 toward the sausage S1.

The sausage holder 82 is provided on a rotary shaft 88 and rotates together with the rotation of the rotary shaft 88 around its axis. In an outer peripheral surface of the sausage holder 82, a sausage housing groove 92 for housing the individual sausage S1 is formed.

The skewer holder 84 is provided on the rotary shaft 88 and rotates together with the rotation of the rotary shaft 88 around its axis. In an outer peripheral surface of the skewer holder 84, a skewer housing groove 94 for housing the individual skewer T is formed.

Note that the rotary shaft 88 is drive-controlled by a control apparatus 86. The control apparatus 86 may also serve as a control apparatus 86 for controlling the parts and units of the linked sausage connecting portion cutting apparatus 10, or a separate independent control apparatus may be newly provided.

Here, the sausage holder 82 and the skewer holder 84 are positioned such that the axis of the sausage S1 housed in the sausage holder 82 and the axis of the skewer T housed in the skewer holder 84 are located on the same straight line. Specifically, the sausage holder 82 and the skewer holder 84 are set such that the sausage housing groove 92 of the sausage holder 82 and the skewer housing groove 94 of the skewer holder 84 are located on the same straight line and communicate with each other. Therefore, upon receipt of the driving force from the driving source 90, the skewer T housed in the skewer housing groove 94 moves from the skewer housing groove 94 toward the sausage housing groove 92 and finally smoothly enters the sausage housing groove 92.

Further, the groove depth of the sausage housing groove 92 and the groove depth of the skewer housing groove 94 are adjusted as follows. Namely, comparing the diameter size of the sausage S1 to be housed in the sausage housing groove 92 with the diameter size of the skewer T to be housed in the skewer housing groove 94, the diameter size of the sausage S 1 is larger than the diameter size of the skewer T. Therefore, the depth of the sausage housing groove 92 is formed to be larger than the depth of the skewer housing groove 94 so that the center of the sausage S1 and the center of the skewer T are located on the same straight line. Accordingly, when the skewer T enters the sausage housing groove 92 from the skewer housing groove 94, the skewer T sticks in the center of the sausage S1.

As described above, the sausage housing groove 92 and the skewer housing groove 94 are positioned to be in the same phase along the direction around the axis of the rotary shaft 88, and the depth of the sausage housing groove 92 is set to be larger than the depth of the skewer housing groove 94 so that the center of the sausage S1 and the center of the skewer T are located on the same straight line. This makes it possible to insert the skewer T into the center of the sausage S 1.

Here, it is preferable that a plurality of sausage housing grooves 92 are formed at predetermined intervals along the outer peripheral direction of the sausage holder 82. It is also preferable that a plurality of skewer housing grooves 94 are formed at predetermined intervals along the outer peripheral direction of the skewer holder 84. The sausage housing grooves 92 are positioned in the same phase to be located on the same straight line with respect to the skewer housing grooves 94.

A configuration in which the plurality of sausage housing grooves 92 and skewer housing grooves 94 are formed makes it possible to shoot the skewer T and insert the skewer T into the center of the sausage S1 every time the sausage holder 82 and the skewer holder 84 are rotated by a predetermined rotation angle around the axis of the rotary shaft 88.

As illustrated in FIG. 6, it is necessary to provide a rotation sensor 96 for detecting that the rotary shaft 88 has rotated by the predetermined rotation angle. Then, every time the rotary shaft 88 rotates by the predetermined rotation angle, a detection signal is outputted from the rotation sensor 96 to the control apparatus 86. Every time receiving the detection signal from the rotation sensor 96, the control apparatus 86 drives an air cylinder 98 being the driving source 90 to shoot the skewer T.

As the driving source 90, for example, one air cylinder 98 is employed. The air cylinder 98 is fixed at a prescribed position of a flange member 100. At the timing when the sausage housing groove 92 and the skewer housing groove 94 communicate with each other in the axial direction of the flange member 100, the detection signal is outputted from the rotation sensor 96 to the control apparatus 86. Thus, the air cylinder 98 is driven, and the skewer T is shot by receiving the driving force (air pressure) from the air cylinder 98.

The air cylinder 98 has a cylinder 102 and a rod 104 extending from and contracting into the cylinder 102. The rod 104 extends from the cylinder 102, whereby the rod 104 pushes out the skewer T to the sausage housing groove 92 side to shoot the skewer T.

Note that the air cylinder 98 is drive-controlled by the control apparatus 86. The control apparatus 86 may also serve as the control apparatus 30 that controls the parts and units of the linked sausage connecting portion cutting apparatus 10, or a separate independent control apparatus may be newly provided.

The sausage skewering device 80 can successively insert the skewers T into the sausages S1 by rotating the rotary shaft 88 and shooting the skewers T at predetermined timings. Consequently, it is possible to greatly improve the operation efficiency of the skewering operation of the sausages S1.

In particular, the sausage housing groove 92 and the skewer housing groove 94 are positioned to communicate with each other and the center of the sausage S1 housed in the sausage housing groove 92 and the center of the skewer T housed in the skewer housing groove 94 are positioned on the same straight line, thereby making it possible to insert the skewer T into the center of the sausage S 1. Thus, the quality of the product as the sausage S1 can be improved.

Note that this embodiment includes the "linked sausage connecting portion cutting apparatus" and the "sausage skewering device." Further, the "sausage producing system" of the present invention is composed of the "linked sausage connecting portion cutting apparatus" and the "sausage skewering device."

In particular, the sausage producing system of the present invention conveys the individual sausages S1 separated by the linked sausage connecting portion cutting apparatus 10 by a conveying means such as a belt conveyor down to the sausage skewering device 80. The sausages S1 are housed one by one into the sausage housing grooves 92 of the sausage holder 82 of the sausage skewering device 80 and the skewers T1 are inserted into the sausages S1.

Further, in addition to the sausage producing system, an invention of the linked sausage connecting portion cutting apparatus 10 as a single body and an invention of the sausage skewering device 80 as a single body can be extracted.

Furthermore, the linked sausage connecting portion cutting apparatus 10 is not limited to the purpose for cutting only the connecting portion of linked sausages but can cut food products such as other meat products. Moreover, similarly, the sausage skewering device 80 is not limited to the purpose for inserting the skewer into the sausage but can insert the skewer into food products such as other meat products.

Note that the configuration including the linked sausage connecting portion cutting apparatus 10 including two cutting devices (the first cutting device 32 and the second cutting device 34) is illustrated, but the linked sausage connecting portion cutting apparatus 10 is not limited to the configuration. For example, it is also adoptable to cut an arbitrary position of the connecting portion S2 of the linked sausages S by using only one cutting device (one of the first cutting device 32 and the second cutting device 34).

### Explanation of Codes

- 10: linked sausage connecting portion cutting apparatus
- 12: conveyor belt (conveyor unit, belt)
- 30: control apparatus (control unit)
- 32: first cutting device (first cutting unit)
- 34: second cutting device (second cutting unit)
- 36A, 36B: pair of blades (first cutting unit)
- 37A, 37B: pair of blades (second cutting unit)
- 38A, 38B: pair of driving mechanisms (first cutting unit)
- 44A1, 44A2: cutting part
- 44B1, 44B2: cutting part
- 45A1, 45A2: cutting part
- 45B1, 45B2: cutting part
- 66: first photosensor (first detecting unit)
- 68: second photosensor (second detecting unit)
- 70: light receiving unit (first photosensor)
- 72: light emitting unit (first photosensor)
- 74: light receiving unit (second photosensor)
- 76: light emitting unit (second photosensor)
- 80: sausage skewering device
- 82: sausage holder
- 84: skewer holder
- 86: control apparatus (drive control unit)
- 88: rotary shaft
- 90: driving source
- 96: rotation sensor (rotation angle detecting unit)
- S: linked sausages
- S1: sausage
- S2: connecting portion
- T: skewer

## Claims

1. A linked sausage connecting portion cutting apparatus for cutting connecting portions of linked sausages composed of a plurality of sausages connected via the connecting portions to separate the sausages from each other, comprising:
a first cutting unit that cuts a front end of the connecting portion;
a second cutting unit that cuts a rear end of the connecting portion;
a first detecting unit that detects the front end of the connecting portion;
a second detecting unit that detects the rear end of the connecting portion;
a control unit that controls an operation of the first cutting unit based on a detection signal from the first detecting unit and controls an operation of the second cutting unit based on a detection signal from the second detecting unit; and
a conveyor unit that conveys the linked sausages to the first cutting unit and the second cutting unit,
wherein the first cutting unit includes a pair of blades each having cutting parts formed at the inside and outside thereof, and a driving mechanism that causes the pair of blades to cross each other,
wherein the second cutting unit includes a pair of blades each having cutting parts formed at the inside and outside thereof, and a driving mechanism that causes the pair of blades to cross each other,
wherein when the front end of the connecting portion is detected by the first detecting unit, the first cutting unit operates based on a control signal from the control unit to cut the front end of the connecting portion with one of the cutting parts at the inside and the cutting parts at the outside and cut the front end of the connecting portion subsequent to the cut connecting portion with the other of the cutting parts at the inside and the cutting parts at the outside while the linked sausages are being conveyed at a predetermined conveyance speed, and
wherein when the rear end of the connecting portion is detected by the second detecting unit, the second cutting unit operates based on a control signal from the control unit to cut the rear end of the connecting portion with one of the cutting parts at the inside and the cutting parts at the outside and cut the rear end of the connecting portion subsequent to the cut connecting portion with the other of the cutting parts at the inside and the cutting parts at the outside while the linked sausages are being conveyed at the predetermined conveyance speed.

2. The linked sausage connecting portion cutting apparatus according to claim 1,
wherein the first detecting unit and the second detecting unit are photosensors,
wherein the photosensor includes a light emitting unit and a light receiving unit,
wherein when an amount of light received by the light receiving unit varies from small to large, the first detecting unit detects the front end of the connecting portion and outputs the detection signal to the control unit, and
wherein when an amount of light received by the light receiving unit varies from large to small, the second detecting unit detects the rear end of the connecting portion and outputs the detection signal to the control unit.

3. The linked sausage connecting portion cutting apparatus according to claim 1 or 2,
wherein the conveyor unit is a belt that conveys the linked sausages in a straight line direction.

4. A sausage producing system comprising:
a linked sausage connecting portion cutting apparatus for cutting connecting portions of linked sausages composed of a plurality of sausages connected via the connecting portions to separate the sausages from each other; and
a sausage skewering device for inserting a skewer into the individual sausage separated by the linked sausage connecting portion cutting apparatus,
the linked sausage connecting portion cutting apparatus comprising:
a first cutting unit that cuts a front end of the connecting portion;
a second cutting unit that cuts a rear end of the connecting portion;
a first detecting unit that detects the front end of the connecting portion;
a second detecting unit that detects the rear end of the connecting portion;
a control unit that controls an operation of the first cutting unit based on a detection signal from the first detecting unit and controls an operation of the second cutting unit based on a detection signal from the second detecting unit; and
a conveyor unit that conveys the linked sausages to the first cutting unit and the second cutting unit,
wherein the first cutting unit includes a pair of blades each having cutting parts formed at the inside and outside thereof, and a driving mechanism that causes the pair of blades to cross each other,
wherein the second cutting unit includes a pair of blades each having cutting parts formed at the inside and outside thereof, and a driving mechanism that causes the pair of blades to cross each other,
wherein when the front end of the connecting portion is detected by the first detecting unit, the first cutting unit operates based on a control signal from the control unit to cut the front end of the connecting portion with one of the cutting parts at the inside and the cutting parts at the outside and cut the front end of the connecting portion subsequent to the cut connecting portion with the other of the cutting parts at the inside and the cutting parts at the outside while the linked sausages are being conveyed at a predetermined conveyance speed, and
wherein when the rear end of the connecting portion is detected by the second detecting unit, the second cutting unit operates based on a control signal from the control unit to cut the rear end of the connecting portion with one of the cutting parts at the inside and the cutting parts at the outside and cut the rear end of the connecting portion subsequent to the cut connecting portion with the other of the cutting parts at the inside and the cutting parts at the outside while the linked sausages are being conveyed at the predetermined conveyance speed, and
the sausage skewering device comprising:
a sausage holder that houses the individual sausage separated by the linked sausage connecting portion cutting apparatus;
a skewer holder that houses the skewer to be inserted into the sausage; and
a driving source that shoots the skewer housed in the skewer holder toward the sausage,
wherein the sausage holder and the skewer holder are positioned such that an axis of the sausage housed in the sausage holder and an axis of the skewer housed in the skewer holder are located on a straight line.

5. The sausage producing system according to claim 4,
wherein the sausage holder and the skewer holder are provided on a same rotary shaft,
wherein a rotation angle detecting unit that detects rotation of the rotary shaft and a drive control unit that controls the driving source are provided,
wherein when the rotation angle detecting unit detects that the rotary shaft has rotated by a predetermined angle, the rotation angle detecting unit outputs a detection signal to the drive control unit, and
wherein the driving source shoots the skewer based on a control signal from the drive control unit.

6. The sausage producing system according to claim 4 or 5,
wherein the first detecting unit and the second detecting unit are photosensors,
wherein the photosensor includes a light emitting unit and a light receiving unit,
wherein when an amount of light received by the light receiving unit varies from small to large, the first detecting unit detects the front end of the connecting portion and outputs the detection signal to the control unit, and
wherein when an amount of light received by the light receiving unit varies from large to small, the second detecting unit detects the rear end of the connecting portion and outputs the detection signal to the control unit.

7. The sausage producing system according to claim 4 or 5,
wherein the conveyor unit is a belt that conveys the linked sausages in a straight line direction.
